# EUROPEAN PATENT SPECIFICATION

(11) **EP 1 113 553 B1**
(45) Date of publication and mention of the grant of the patent: **27.10.2004**
(21) Application number: 99830806.8
(22) Date of filing: 28.12.1999
(51) Int. Cl.: H02G 3/06, F16L 41/08

(54) **Liquid-tight coupling**
Flüssigkeitsdichte Kupplung
Raccord étanche

(43) Date of publication of application: 04.07.2001
(73) Proprietor: Bertoldo & C. Srl, 10078 Venaria Reale (Torino) (IT)
(72) Inventor: Bertoldo, Piero, 10070 Balangero, Torino (IT)
(74) Representative: Marchitelli, Mauro

(56) References cited:
- EP-A- 0 961 375
- US-A- 4 468 535
- US-A- 5 346 264

## Description

This invention refers to a liquid-tight coupling. The invention has been developed in particular to establish a liquid-tight connection between a conduit of an electrical system and a wall, for example, of a junction box. However, the invention may be used in all cases in which a liquid-tight connection must be established between a general tubular-shaped element and a wall with a hole.

EP-A-961375 of the same applicant describes a liquid-tight coupling for boxes for electrical material with the characteristics set forth in the preamble of Claim 1, including a tubular-shaped section intended to be inserted in a hole in a wall and snap-fit surfaces for engagement in the aforesaid wall. This known coupling includes a supporting surface and an axially deformable disc-type gasket which, during use, is compressed between the supporting surface of the coupling and an external surface of the wall. The coupling described in EP-A-961375 permits liquid-tight connection with walls of different thickness through axial deformation of the gasket. For example, a coupling intended to be inserted in a 32-mm-diameter hole can be used with between 2.2 and 2.8 mm thick walls.
US5346264 discloses a fitting for corrugated tubing having a shank to receive the corrugated tubing and a collar of greater diameter than the shank. Pawls extend from the shank between the collar and the end of the shank. The pawls resiliently extend to engage themselves in an inner corrugation of the corrugated tubing. Various pawl configurations engage the inside corrugations of corrugated tubing for a quick and firm liquid tight connection.

The purpose of this invention is to provide a coupling of the type defined above able to establish a liquid-tight connection with walls in a wider range of thickness, for example between 2 and 4 mm.

According to this invention, this purpose is achieved by a coupling with the characteristics set forth in Claim 1.

Other secondary characteristics of the coupling according to the invention are defined in the dependent claims.

This invention is described in detail below referring to the accompanying drawings provided purely by way of an illustrative, non-restrictive example

Other secondary characteristics of the coupling according to the invention are defined in the dependent claims.

This invention is described in detail below referring to the accompanying drawings provided purely by way of an illustrative, non-restrictive example where:
- figure 1 is a perspective view of the first embodiment of a coupling according to the invention before insertion of this in a wall,
- figure 2 is a detail in larger scale of the part circled in figure 1,
- figures 3 and 5 are perspective views of the coupling of figure 1 inserted in two walls of different thickness,
- figures 4 and 6 are details in larger scale of the parts circled in figures 3 and 5,
- figures 7, 8, 9 and 10 are axial sections showing the coupling of figure 1 inserted in walls of gradually increasing thickness,
- figures 11 and 12 are enlarged details of the parts circled in figures 8 and 9,
- figure 13 is a perspective view of a second embodiment of a coupling according to the invention,
- figures 14 and 16 are perspective views of the coupling of figure 13 inserted in two walls of different thickness,
- figures 15 and 17 are enlarged details of the parts circled in figures 14 and 16,
- figures 18, 19, 20 and 21 are axial sections showing the coupling of figure 13 inserted in walls of gradually increasing thickness, and
- figures 22 and 23 are enlarged details of the parts circled in figures 18 and 21.

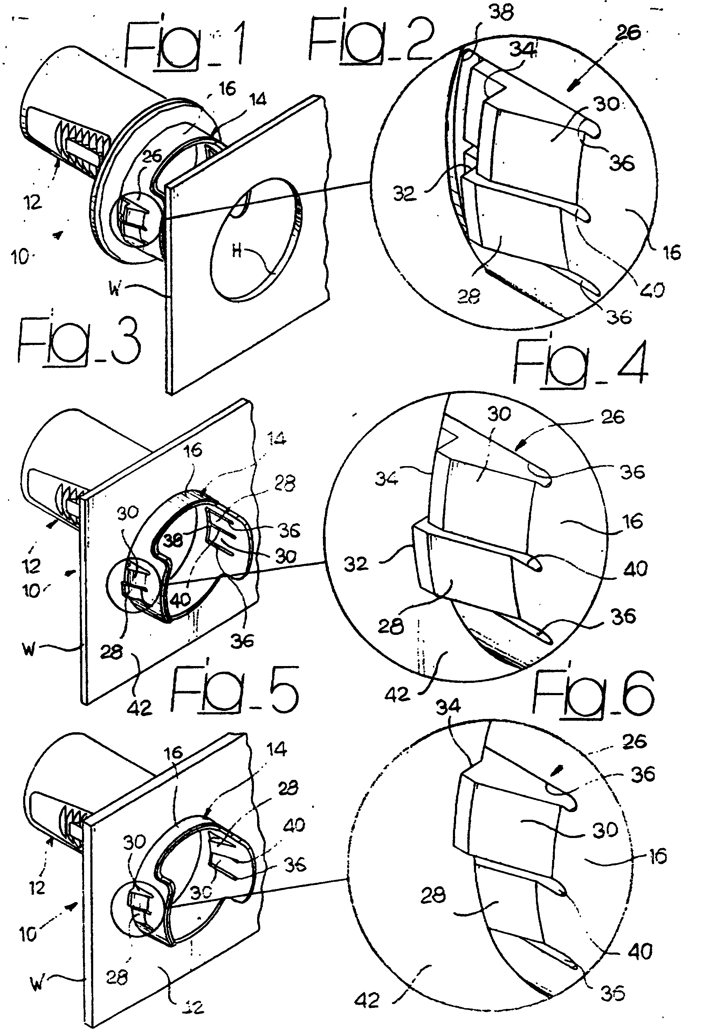

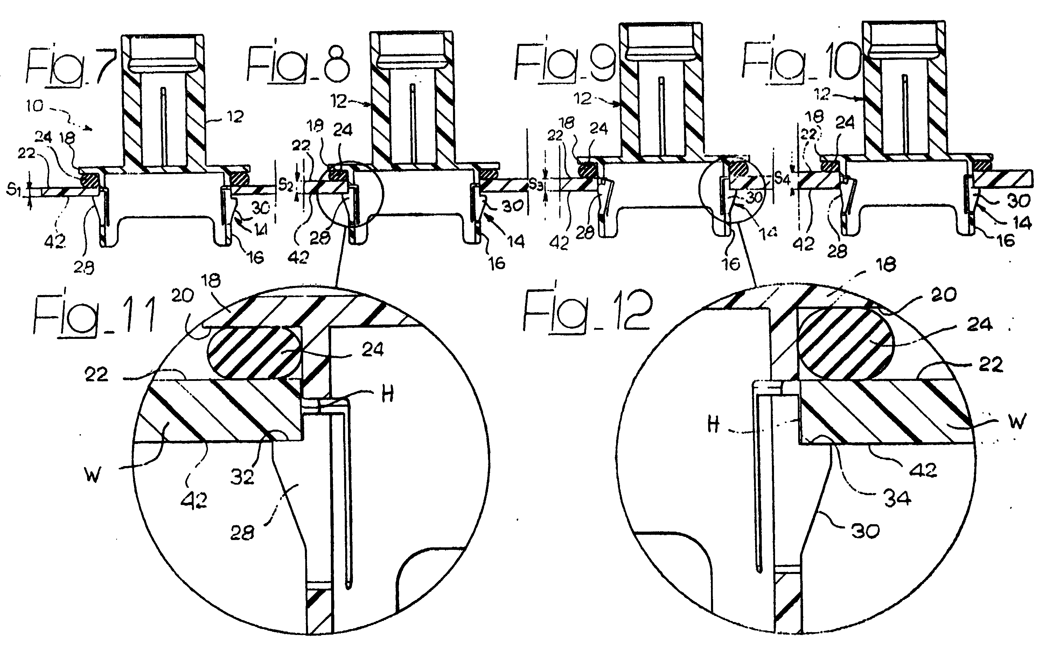

In figures 1 to 6, 10 indicates a coupling according to a first embodiment of this invention. The coupling 10 includes a coupling section 12 intended to be connected to a tubular-shaped element, for example a smooth or ribbed conduit for electrical installations. The construction details of the coupling section 12 are not described in that they are not within the scope of this invention. The coupling section 12 may be shaped in any way able to establish a preferably liquid-tight connection between the coupling 10 and a general tubular-shaped element. For example, the coupling section 12 may be constructed as described in document EP-A-568032 or EP-A-961376 of the same applicant.

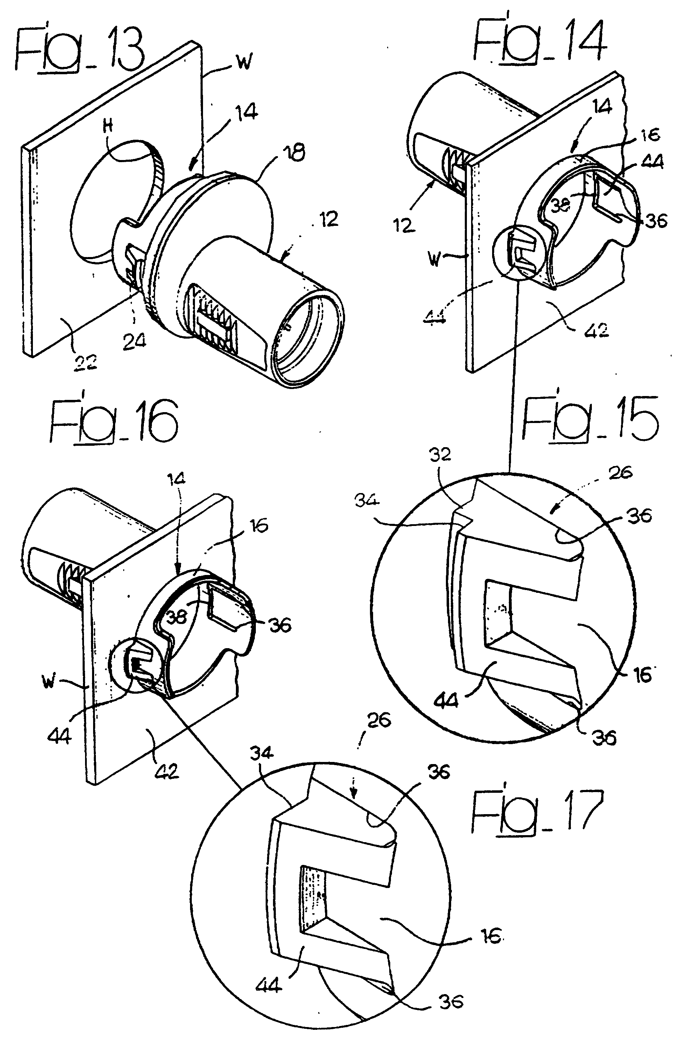

The coupling 10 includes an attachment section 14 intended to establish a liquid-tight connection with a wall W with a hole H. The attachment section 14 includes a tubular-shaped portion 16 intended to be inserted in the hole H. A ring-shaped portion 18 protrudes in a radial direction from the tubular-shaped portion 16 and divides the attachment section 14 from the coupling section 12. The ring-shaped portion 18 has a supporting surface 20 (see in particular figures 11 and 12) facing towards an outer surface 22 of the wall W. A disc-type gasket 24 is inserted on the tubular-shaped portion 16 and, during use, is compressed in an axial direction between facing surfaces 20, 22. The gasket 24 consists preferably of a material with a hardness of between 10-50 Sh A and, when not compressed, is preferably circular in cross section.

The coupling section 14 includes two or more snap-fit devices 26 formed on the wall of the tubular-shaped portion 16. With particular reference to figures 2, 4 and 6, each snap-fit device 26 includes two or more elastically deformable teeth 28, 30, each with its respective snap-fit surface 32, 34. The snap-fit surfaces 32, 34 are located at a distance from each other in an axial direction, i.e. in a direction at right angles to the supporting surface 20 of the ring-shaped portion 18. The distance between each snap-fit surface 32, 34 and the supporting surface 20 is determined according to the diameter and hardness of the gasket 24, so as to assure that the coupling 10 is able to establish a fluid-tight connection with the wall W in a relatively broad range of wall thickness values.

In the examples illustrated, each snap-fit device 26 includes two snap-fit surfaces 32, 34 offset in an axial direction. To increase the range of variation of the thickness of the wall W, it is sufficient to increase the number of axially offset snap-fit surfaces.

In the example illustrated in figures 1 to 12, the elastically deformable teeth 28, 30 are defined by two axial through-cuts 36, by a tangential cut 38 and by an axial through-cut 40 that permits independent radial deformation of the two teeth 28, 30: in an embodiment not illustrated, the axial cut 40 could be eliminated without impairing functioning of the device according to the invention.

Figures 7 to 10 show the coupling according to the invention fitted on walls W of different thickness, indicated with S1, S2, S3 and S4. For guidance purposes only, these thicknesses could have the following values: S1 = 2 mm, S2 = 3 mm, S3 = 3.1 mm S4 = 4.1 mm. In the case illustrated in figures 7 and 8 the surfaces 32 of the teeth 28 mate with the inner surface 42 of the wall W while the surfaces 34 of the teeth 30 are at a distance in an axial direction from the surface 42. The condition illustrated in figure 8 represents the maximum compression position of the gasket 24. If the thickness of the wall exceeds S2 (value of the thickness that results in maximum compression of the gasket), the teeth 28 are no longer able to snap-fit in the wall W and mating is assured by the teeth 30 as shown in figures 9 and 12. In this case the teeth 28 are deflected in a radial direction towards the inside wall of the hole H.

The coupling 10 according to this invention is able to establish a liquid-tight connection with walls W of any thickness between the minimum value S1 and the maximum value S4. The coupling adapts automatically to wall thickness. In fact, the coupling is assembled simply by pushing the coupling in an axial direction until maximum compression of the gasket obtainable with a normal manually applied force is achieved. In the case of the fitting conditions shown in figures 7 and 8 the user will hear two clicks during insertion of the coupling in the hole H, corresponding to the first click of the teeth 30 and then of the teeth 28. In the case of the fitting conditions shown in figures 9 and 10, the user will hear only one click corresponding to the condition of engagement of the teeth 30. Regardless of the thickness of the wall, the gasket 24 is compressed in an axial direction between the facing surfaces 20, 22 and guarantees a liquid-tight connection between the coupling 10 and the wall W. The degree of compression of the gasket varies according to the thickness of the wall.

With reference to figures 13 to 23, a second embodiment of the coupling according to this invention is described below. In these figures the parts corresponding to those described above are identified by the same numbers.

In the embodiment shown in figures 1 to 12, the snap-fit surfaces 32, 34 are located at a distance from each other in an axial direction and in a radial direction in relation to the tubular-shaped portion 16. In the variant according to figures 13-23 the snap-fit surfaces 32, 34 are formed on a single tooth 44 and are located at a distance from each other in an axial and radial direction. The snap-fit surface 32 closest to the supporting surface 20 occupies a radially more internal position in relation to the snap-fit surface 34 furthest from the supporting surface 20. In this case also, a higher number of snap-fit surfaces can be used in order to further increase the range of variation of wall thickness with which the coupling can mate. Each tooth 44 is formed on the tubular-shaped portion 16 of the attachment section 14 by means of a pair of axial through-cuts 36 and a tangential through-cut 38.

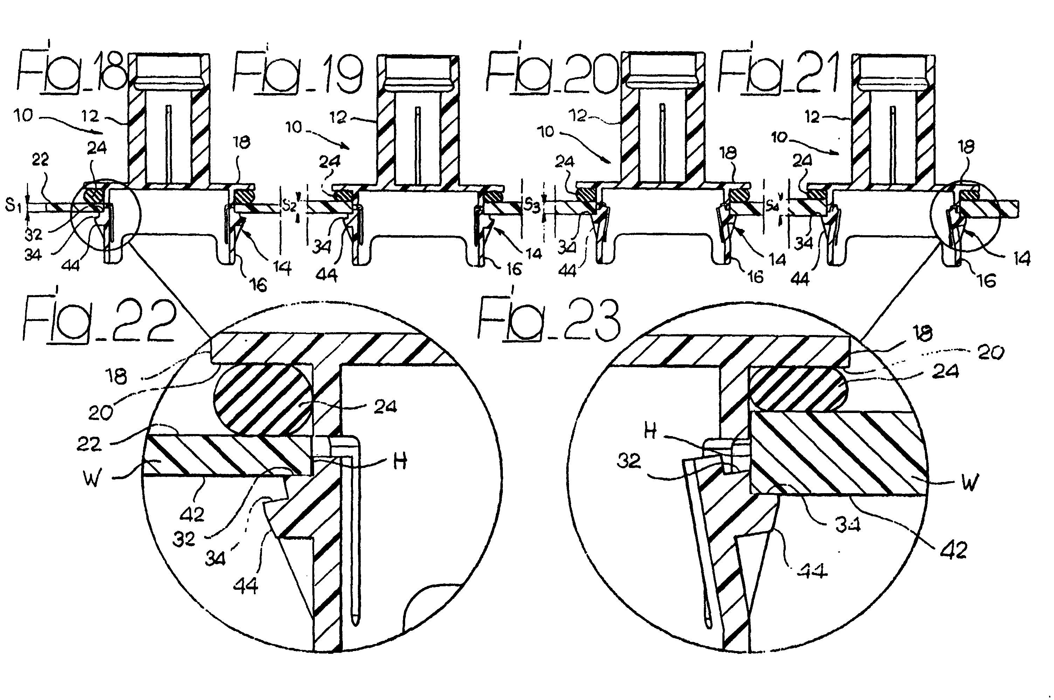

With reference to figures 18 to 23, when the coupling 10 is fitted on walls W with a thickness of between S1 and S2 the snap-fit surfaces 32 engage the inner surface 42 of the wall W and the gasket 24 is compressed against the outer surface 22 of the wall W to a variable extent according to the thickness of the wall. When the coupling 10 is fitted on walls W with a thickness between S3 and S4, the connection is assured by the snap-fit surfaces 34 and each tooth 44 assumes a position deflected slightly towards the inside. In this case also the gasket 24 is compressed against the outer surface 22 of the wall W to a variable extent according to the thickness of the wall.

As in the embodiment described above, the coupling 10 is fitted by inserting the attachment section 14 in the hole H and applying a manual force in an axial direction until maximum compression of the gasket 24 is obtained. If the coupling is fitted on walls with a thickness of less than S2, the user will hear two clicks corresponding to mating with the surfaces 34 clicks corresponding to mating with the surfaces 34 and 32. If the coupling is fitted on walls with a thickness of between S3 and S4 the user will hear only one click corresponding to engagement of the surfaces 34.

## Claims

1. A liquid-tight coupling which, in use, establishes a liquid tight connection with a wall (W) of variable thickness (S1-S4), including:
- a tubular-shaped portion (16) intended to be inserted in a hole (H) of said wall (W),
- a supporting surface (20) protruding in a radial direction from the aforesaid tubular-shaped portion (16),
- snap-fit devices (26) on the aforesaid tubular-shaped portion (16) and including snap-fit surfaces (32, 34) protruding outside the aforesaid tubular-shaped portion (16) and facing towards the aforesaid supporting surface (20), and
- a disc-type gasket (24) located between said supporting surface (20) and said snap-fit surfaces (32, 34) and axially deformable between conditions of minimum and maximum compression,
**characterized in that** said snap-fit devices (26) include at least two snap-fit surfaces (32, 34) at a distance from each other in an orthogonal direction in relation to the aforesaid supporting surface (20), said disc-type gasket (24) being compressible in the axial direction so as to guarantee a liquid-tight connection for wall thicknessess (S1-S4) within the range of 2 mm to 4.1 mm as it is compressed, in use, to a variable extent according to the thickness of the wall (w) between said supporting surface (20) and the outer surface (22) of the wall (w).

2. Coupling according to Claim 1, **characterized in that** the aforesaid snap-fit surfaces (32, 34) are also at a distance from each other in a tangential direction in relation to the aforesaid tubular-shaped portion (16).

3. Coupling according to Claim 1, **characterized in that** the aforesaid snap-fit surfaces (32, 34) are also at a distance from each other in a radial direction in relation to the aforesaid tubular-shaped portion (16).

4. Coupling according to Claim 1, **characterized in that** the aforesaid snap-fit surfaces (32, 34) are formed on respective teeth (28, 30) that are elastically deformable independently of each other.

5. Coupling according to Claim 1, **characterized in that** the aforesaid snap-fit surfaces (32, 34) are formed on one and the same elastically deformable tooth (44).

6. Coupling according to Claim 1, **characterized in that** the hardness of the aforesaid gasket is between 10-50 Sh A.

## Patentansprüche

1. Flüssigkeitsdichte Kupplung, welche eine flüssigkeitsdichte Verbindung mit einer Wand (W) von variabler Stärke (S1-S4) bei der Benutzung bewirkt, umfassend:
- einen röhrenförmig gestalteten Abschnitt (16), welcher zum Einführen in ein Loch (H) der Wand (W) vorgesehen ist,
- eine Halteoberfläche (20), welche in radialer Richtung aus dem oben genannten röhrenförmig gestalteten Abschnitt (16) herausragt,
- Einrastvorrichtungen (26) auf dem oben genannten röhrenförmig gestalteten Abschnitt (16), welche Einrastoberflächen (32,34) umfassen, die aus dem oben genannten röhrenförmig gestalteten Abschnitt (16) herausragen und gegenüber der oben genannten Halteoberfläche (20) liegen, und
- eine scheibenartige Dichtung (24), die zwischen der Halteoberfläche (20) und den Einrastoberflächen (32,34) angeordnet ist, und zwischen minimalen und maximalen Kompressionszuständen axial verformbar ist,
**dadurch gekennzeichnet, dass** die Einrastvorrichtungen (26) zumindest zwei in Bezug auf die oben genannte Halteoberfläche (20) in einer orthogonalen Richtung zueinander beabstandete Einrastoberflächen (32,34) umfassen, wobei die scheibenartige Dichtung (24) in der axialen Richtung zusammendrückbar ist, um eine flüssigkeitsdichte Kupplung für Wandstärken (S1-S4) innerhalb des Bereichs von 2 mm bis 4.1 mm sicherzustellen, wenn sie in Benutzung in einem variablen Ausmaß gemäß der Stärke der Wand (W) zwischen der Halteoberfläche (20) und der Außenoberfläche (22) der Wand (W) zusammengedrückt wird.

2. Kupplung gemäß Anspruch 1, **dadurch gekennzeichnet, dass** die oben genannten Einrastoberflächen (32,34) ebenso in einer tangentialen Richtung in Bezug auf den oben genannten röhrenförmig gestalteten Abschnitt (16) zueinander beabstandet sind.

3. Kupplung gemäß Anspruch 1, **dadurch gekennzeichnet, dass** die oben genannten Einrastoberflächen (32,34) ebenso in einer radialen Richtung in Bezug auf den oben genannten röhrenförmig gestalteten Abschnitt (16) zueinander beabstandet sind.

4. Kupplung gemäß Anspruch 1, **dadurch gekennzeichnet, dass** die oben genannten Einrastoberflächen (32,34) auf den entsprechenden Zähnen (28,30) gebildet sind, die unabhängig voneinander elastisch verformbar sind.

5. Kupplung gemäß Anspruch 1, **dadurch gekennzeichnet, dass** die oben genannten Einrastoberflächen (32,34) auf dem ein und demselben elastisch verformbaren Zahn (44) gebildet sind.

6. Kupplung gemäß Anspruch 1, **dadurch gekennzeichnet, dass** die Härte der oben genannten Dichtung zwischen 10-50 Sh A ist.

## Revendications

1. Couplage étanche aux liquides qui, en service, établit une liaison étanche aux liquides avec une paroi (W) d'épaisseur variable (S1-S4), ledit couplage incluant :
- une portion de forme tubulaire (16) destinée être insérée dans un trou (H) de ladite paroi (W),
- une surface de support (20) en saillie dans une direction radiale à partir de ladite portion de forme tubulaire (16),
- des dispositifs d'encliquetage (26) situés sur ladite portion de forme tubulaire (16) et incluant des surfaces d'encliquetage (32, 34) en saillie à l'extérieur de ladite portion de forme tubulaire (16) et dirigées vers ladite surface de support (20), et
- une garniture de type disque (24) placées entre ladite surface de support (20) et lesdites surface d'encliquetage (32, 34) et aptes à se déformer axialement entre des états de compression minimale et maximale,
**caractérisé en ce que** lesdits dispositifs d'encliquetage (26) incluent au moins deux surface d'encliquetage (32, 34) situées à distance l'une de l'autre dans une direction orthogonale par rapport à ladite surface de support (20), ladite garniture de type disque (24) étant compressible dans la direction axiale de manière à garantir une liaison étanche aux liquides pour des épaisseurs de paroi (S1-S4) dans l'intervalle de 2 mm à 4,1 mm lorsqu'elle est comprimée, en service, plus ou moins en fonction de l'épaisseur de la paroi (W) entre ladite surface de support (20) et la surface extérieure (22) de la paroi (W).

2. Couplage selon la revendication 1, **caractérisé en ce que** lesdites surfaces d'encliquetage (32, 34) sont également situées à distance l'une de l'autre dans une direction tangentielle par rapport à ladite portion de forme tubulaire (16).

3. Couplage selon la revendication 1, **caractérisé en ce que** lesdites surfaces d'encliquetage (32, 34) sont également situées à distance l'une de l'autre dans une direction radiale par rapport à ladite portion de forme tubulaire (16).

4. Couplage selon la revendication 1, **caractérisé en ce que** lesdites surfaces d'encliquetage (32, 34) sont formées sur des dents respectives (28, 30) qui sont déformables élastiquement indépendamment l'une de l'autre.

5. Couplage selon la revendication 1, **caractérisé en ce que** lesdites surfaces d'encliquetage (32, 34) sont formées sur une seule et même dent (44) déformable élastiquement.

6. Couplage selon la revendication 1, **caractérisé en ce que** la dureté de ladite garniture est comprise entre 10 et 50 degrés Shore A.
